# EUROPEAN PATENT APPLICATION

(11) **EP 4 848 160 A1**
(43) Date of publication of application: **02.12.2026**
(21) Application number: 25744895.1
(22) Date of filing: 15.01.2025
(51) Int. Cl.: G06N 20/00, G05B 13/04, G05B 19/418, G06F 8/36

(54) **SUPPORT METHOD, SUPPORT DEVICE, AND SUPPORT PROGRAM**

(30) Priority: 24.01.2024 JP 2024008853
(71) Applicant: Chiyoda Corporation, Kanagawa 220-8765 (JP)
(72) Inventor: FURUICHI Kazuya, Yokohama-shi Kanagawa 220-8765 (JP); YAMAGUCHI Yoshihiro, Yokohama-shi Kanagawa 220-8765 (JP)
(74) Representative: Gulde & Partner
(86) International application number: PCT/JP2025/000926
(87) International publication number: WO 2025/158965

(57) **Abstract**

A method for supporting implementation of a model relating to an operation of a plant facility is provided. This method is executed by a processor, and comprises acquiring facility identification information of the plant facility or process identification information of a process executed in the plant facility; acquiring parameter identification information of a parameter acquired in the operation of the plant facility; acquiring time-series data of the parameter; selecting a model recommended for implementation from among a plurality of models relating to the operation of the plant facility, based on the facility identification information or the process identification information, the parameter identification information, and the time-series data of the parameter; and outputting information of the selected model.

## Description

### Technical Field

The present invention relates to a support method, a support device, and a support program for supporting a development of a model relating to an operation of a plant facility.

### Background Art

Various models are used to design, construct, operate, and manage a plant. A model suited to a type, a scale, a location, and the like of the plant is developed for each plant.

### Citation List

### Patent Literature

[Patent Literature 1] Japanese Unexamined Patent Application Publication No. 2023-016369

### Summary of Invention

### Technical Problem

Since an administrator of the plant does not have specialized knowledge about models, it is difficult to know what kind of model should be implemented in order to suitably operate the plant managed by the administrator. The present inventors have recognized as a problem that a technique of accurately selecting a model recommended for implementation according to the plant and proposing the selected model to the administrator or the like of the plant is required.

The present invention has been made in view of such a situation, and an object of the present invention is to provide a technique for supporting the development of the model relating to the operation of the plant facility.

### Solution to Problem

In order to solve the above problem, a method according to an aspect of the present invention is a method for supporting implementation of a model relating to an operation of a plant facility, the method being executed by a processor, and comprising: acquiring facility identification information of the plant facility or process identification information of a process executed in the plant facility; acquiring parameter identification information of a parameter acquired in the operation of the plant facility; acquiring time-series data of the parameter; selecting a model recommended for implementation from among a plurality of models relating to the operation of the plant facility, based on the facility identification information or the process identification information, the parameter identification information, and the time-series data of the parameter; and outputting information of the selected model.

Another aspect of the present invention is a support device. This device includes: an information acquisition unit configured to acquire the facility identification information of the plant facility or the process identification information of the process executed in the plant facility, the parameter identification information of the parameter acquired in the operation of the plant facility, and the time-series data of the parameter; a selection unit configured to select the model recommended for implementation from among the plurality of models relating to the operation of the plant facility, based on the facility identification information or the process identification information, the parameter identification information, and the time-series data of the parameter; and an output unit configured to output the information of the selected model.

Note that any combination of the above components, and a conversion of the expression of the present invention among a method, a device, a system, a recording medium, a computer program, and the like are also valid as an aspect of the present invention.

According to the present invention, the technique for supporting the development of the model relating to the operation of the plant facility can be provided.

### Brief Description of Drawings

FIG. 1 is a diagram schematically showing an example of a development method of a model relating to an operation of a plant facility.
FIG. 2 is a diagram showing a configuration of a development support system according to a first embodiment.
FIG. 3 is a diagram showing a configuration of a construction support device according to the first embodiment.
FIG. 4 is a flowchart showing a procedure of a support method according to the first embodiment.
FIG. 5 is a diagram showing an example of a data structure of a processing element holding unit.
FIG. 6 is a diagram showing an example of the data structure of the processing element holding unit.
FIG. 7 is a diagram showing a configuration of a development support device according to the first embodiment.
FIG. 8 is a flowchart showing a procedure of the support method according to the first embodiment.
FIG. 9 is a diagram showing an example of a screen displayed on a display device of the development support device.
FIG. 10 is a diagram showing an example of the screen displayed on the display device of the development support device.
FIG. 11 is a diagram showing a configuration of a development support system according to a second embodiment.
FIG. 12 is a sequence diagram showing a procedure of a support method according to the second embodiment.
FIG. 13 is a diagram showing a configuration of a development support device according to the second embodiment.
FIG. 14 is a diagram showing an example of internal data of a recommendation degree holding unit.
FIG. 15 is a diagram showing an example of the internal data of the recommendation degree holding unit.
FIG. 16 is a diagram showing an example of time-series data of a parameter.
FIG. 17 is a diagram showing an example of a screen presented from the development support device to an administrator terminal.
FIG. 18 is a diagram showing an example of a screen presented from the development support device to the administrator terminal.

### Description of Embodiments

First, as a first embodiment of the present disclosure, a technique for providing a processing element list including processing elements that should constitute a development process of a model relating to an operation of a plant facility when developing the model will be described. Subsequently, as a second embodiment of the present disclosure, a technique for proposing a model recommended for implementation in order to suitably operate the plant facility based on information regarding the plant facility will be described.

### (First Embodiment)

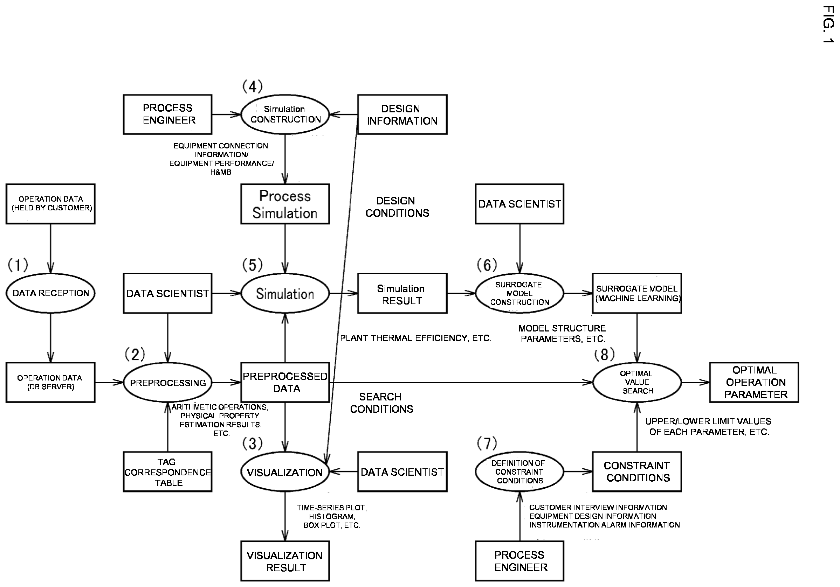

FIG. 1 schematically shows an example of a development method of a model relating to an operation of a plant facility. In this figure, a procedure of a method for developing AI (Artificial Intelligence) that optimizes the operation of the plant facility is shown as an example of the model relating to the operation of the plant facility.

In step (1), operation data collected and accumulated in an existing plant facility held by a customer is stored in a database server.

In step (2), preprocessing is executed on the operation data stored in the database server. The preprocessing may include, for example, processing of assigning the same tag to the same or similar operation data when different tags are assigned thereto, aligning a unit of the operation data, adjusting an offset of the operation data, processing an outlier of the operation data, performing normalization processing on the operation data, imputing missing operation data, or calculating other data representing a physical property, a state, or the like from the operation data by using a predetermined calculation formula, an algorithm, a simulation, or the like. The preprocessing may be executed with reference to a tag correspondence table defining a correspondence relationship of the tags assigned to the operation data. The content of the preprocessing may be determined by a data scientist who has specialized knowledge for organizing and analyzing data.

In step (3), the data scientist visualizes the preprocessed data with reference to design information such as a process flow diagram (PFD) and a heat and material balance (H&MB). The data scientist visualizes the preprocessed data in a format suitable for the design information of the plant, such as a time-series plot, a histogram, and a box plot. The visualized data may be referred to by the data scientist or a process engineer in subsequent steps, or may be provided to the customer. The visualized data may be used, for example, for grasping an operation state of the plant (a production amount of a product, presence/absence of an operation stop, efficiency of equipment, etc.) and for confirming the validity of selection of the operation data (data type, extraction period) and of the preprocessing of the operation data.

In step (4), the process engineer having specialized knowledge about the design and the operation of the plant facility constructs a process simulation for simulating the operation of the plant facility based on the design information such as the process flow diagram (PFD), the heat and material balance (H&MB), and an equipment performance. When an existing process simulator is available, this step (4) is omitted.

In step (5), the data scientist simulates the operation of the plant facility by using the preprocessed data in a stable region as an input value of the process simulation to obtain a simulation result such as a plant thermal efficiency.

In step (6), the data scientist constructs a surrogate model (proxy model) substituting for the process simulation. The surrogate model receives an input of the preprocessed data in the stable region and outputs a simulation result without simulating the operation of the plant facility. The surrogate model may be constructed by a neural network or the like. The data scientist trains the surrogate model by using the preprocessed data and the simulation result by the process simulation as training data. For example, an intermediate layer of the neural network may be adjusted such that when the preprocessed data is input to an input layer of the neural network, actual performance data corresponding to the preprocessed data or the simulation result output when the preprocessed data is input to the process simulation is output from an output layer of the neural network. Note that an emulation model constructed based on the operation data or a physical model constructed from first principles may be utilized for the surrogate model.

In step (7), the process engineer defines a constraint condition when optimizing the operation of the plant facility. The constraint condition may be an upper limit value, a lower limit value, or the like of various parameters. The process engineer may define the constraint condition based on information obtained by hearing from the customer, equipment design information, instrumentation alarm information, and the like.

In step (8), the operation optimization AI searches for a value of an operation parameter that optimizes the operation of the plant facility under the defined constraint condition. The operation optimization AI inputs a large amount of the preprocessed data to the surrogate model, and searches for a value of input data such that a value of predetermined data among the output data becomes an optimal value in accordance with a predetermined optimization algorithm. Since the surrogate model can instantaneously calculate output data from input data, an optimal solution can be searched for from among a huge number of combinations of input data by using the surrogate model even in a complicated process in which a simulation calculation takes several days to several weeks.

The flow of the work process as described above is also the same when developing an operation optimization AI for another plant facility. Therefore, if information regarding the work process when a model is developed is accumulated, when developing a similar model in the future, the model can be smoothly developed by referring to past actual results in the similar work process. Accordingly, since formulation of a work plan and management of the work process for developing the model can be facilitated, a cost, a time, a labor, and the like for developing the model can be reduced.

Some work processes included in the development of the operation optimization AI are also executed in the development of the operation optimization AI for the other plant facility or the development of another model. For example, considering a characteristic that operation data is time-series data collected during operation of a plant facility, values thereof are normally expected to be continuous, and it is difficult to assume that the values suddenly change to completely different values unpredictably, as a task of preprocessing the operation data, the task of removing, as an outlier, data having increased or decreased from an immediately preceding value by equal to or more than a predetermined change rate is a task that should be executed in common in the development of the operation optimization AI for the other plant facility or the development of another model. When such a common work is packaged in advance, an existing package can be used when newly developing a model, so that the cost, time, labor, and the like required for developing the model can be significantly reduced.

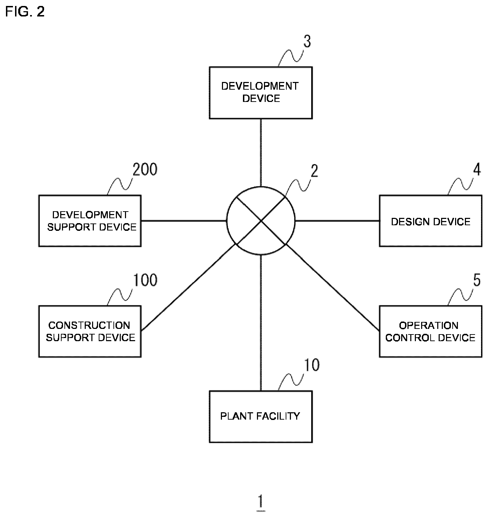

FIG. 2 shows a configuration of a development support system according to the first embodiment. A development support system 1 includes a development device 3, a design device 4, an operation control device 5, a construction support device 100, a development support device 200, and a communication network 2 for communicably connecting these devices.

A plant facility 10 includes a facility, an equipment, a device, a piping, and the like for executing a process in a plant. For example, in a chemical plant, the plant facility 10 includes a reactor, a separation device, a drying device, a piping, and the like.

The development device 3 develops a model relating to the operation of the plant facility 10. The model may be a simulation model that simulates an operation state of the plant facility 10 or a state of a fluid, a reaction model that simulates a chemical reaction in the plant facility 10, a surrogate model that substitutes for the simulation model or the reaction model, AI for verifying scale-up or scale-down in a design of the plant facility 10, AI for optimizing the operation of the plant facility 10, AI for detecting or predicting an abnormality during the operation of the plant facility 10, and the like.

The design device 4 designs the plant facility 10 by using the model developed by the development device 3.

The operation control device 5 controls the operation of the plant facility 10 by using the model developed by the development device 3.

The development support device 200 supports the development of the model in the development device 3. The development support device 200 acquires facility identification information of the plant facility 10 or process identification information of a process executed in the plant facility 10, and target output information of the model, and outputs a processing element list including processing elements that should constitute a development process of the model based on the acquired facility identification information or the process identification information, and the target output information. Accordingly, since a developer can develop a model using a processing element list of a model developed in the past, a development cost, time, labor, and the like can be significantly reduced.

The target output information of the model is information finally or intermediately output by the model in accordance with the purpose of the model. For example, the target output information of the simulation model is a simulation result, and the target output information of the operation optimization AI is an operation parameter for optimizing the operation of the plant facility 10.

The construction support device 100 accumulates past record information referred to by the development support device 200 to output the processing element list, and supports a construction of a development support environment. The construction support device 100 acquires the facility identification information of the plant facility 10 which is a target of a developed model or the process identification information of the process executed in the plant facility 10, and the target output information of the developed model, acquires a processing element constituting a development process of the developed model, and stores the processing element in association with the facility identification information or the process identification information, and/or the target output information.

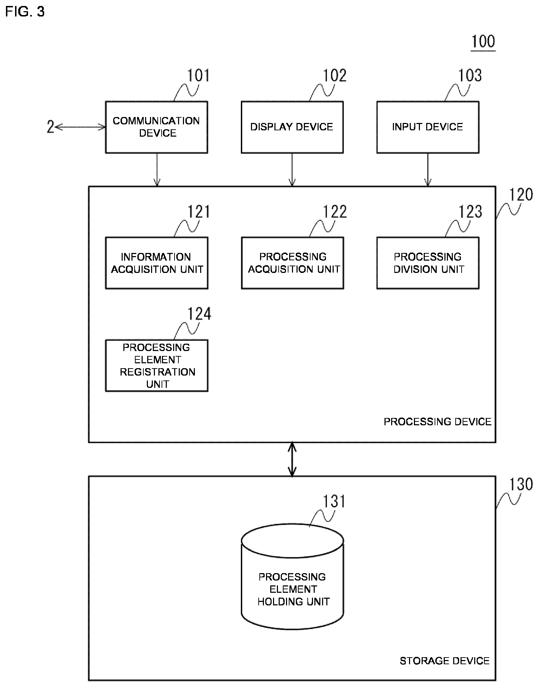

FIG. 3 shows a configuration of the construction support device 100 according to the first embodiment. The construction support device 100 includes a communication device 101, a display device 102, an input device 103, a processing device 120, and a storage device 130.

The communication device 101 controls wireless or wired communication. The display device 102 displays a screen generated by the processing device 120. The display device 102 may be a liquid crystal display device, an organic EL display device, or the like. The input device 103 transmits an instruction input by a user of the construction support device 100 to the processing device 120. The input device 103 may be a mouse, a keyboard, a touch pad, or the like. The display device 102 and the input device 103 may be implemented as a touch panel.

The storage device 130 stores data and computer programs used by the processing device 120. The storage device 130 includes a processing element holding unit 131.

The processing element holding unit 131 holds processing elements that should constitute a development process of a model relating to an operation of the plant facility 10 in association with facility identification information or process identification information of the plant facility 10, and/or target output information of the model. The processing element holding unit 131 may hold a source code of a module that should constitute the development process of the model, or the model. Further, the processing element holding unit 131 may hold a variable, a constant, a parameter, and the like included in the source code.

The processing device 120 includes an information acquisition unit 121, a processing acquisition unit 122, a processing division unit 123, and a processing element registration unit 124. These configurations are realized by any circuit, a CPU of a computer, memory, a program loaded in the memory, and the like in terms of hardware components, but functional blocks realized by their cooperation are depicted here. Therefore, it will be understood by those skilled in the art that these functional blocks can be realized in various forms by only hardware, only software, or a combination thereof.

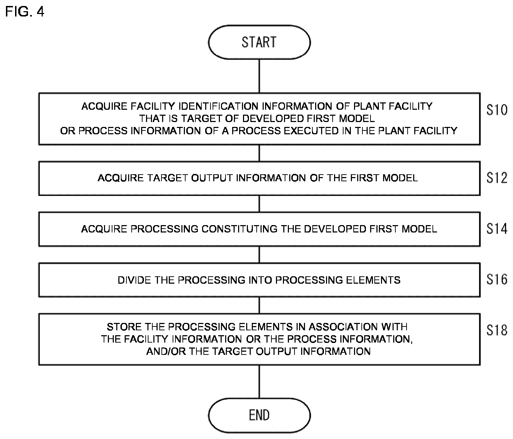

FIG. 4 is a flowchart showing a procedure of the support method according to the first embodiment. A procedure for supporting a construction of a development support environment by the construction support device 100 will be described with reference to FIGS. 3 and 4. Note that a developed model is referred to as a "first model", and a model to be newly developed is referred to as a "second model".

The information acquisition unit 121 acquires facility identification information of a plant facility that is a target of the developed first model, or process identification information of a process executed in the plant facility (S10). The facility identification information may include information such as a type, a scale, a size, and a performance of the plant facility. The process identification information may include information such as a raw material, a final product, an intermediate product, a type of reaction or processing, a time, and a condition. The information acquisition unit 121 may acquire the facility identification information or the process identification information from the development device 3, the design device 4, the development support device 200, and the like. The information acquisition unit 121 may acquire the facility identification information or the process identification information from a developer or the like via the input device 103.

The information acquisition unit 121 acquires target output information of the developed first model (S12). The target output information is information finally or intermediately output by the model, and includes, for example, a condition such as a value of a control amount for optimizing the operation of the plant in the above-described plant optimization model. The information acquisition unit 121 may acquire the target output information from the development device 3, the design device 4, the development support device 200, and the like. The information acquisition unit 121 may acquire the target output information from the developer or the like via the input device 103. The information acquisition unit 121 may acquire the target output information by analyzing a source code, a system design drawing, and the like of the first model.

The processing acquisition unit 122 acquires processing constituting the developed first model (S14). The processing may include a work process for developing the first model, a component (module) constituting the first model, and the like. The processing acquisition unit 122 may acquire source code, variables, constants, parameters, and the like of the module constituting the first model. The processing acquisition unit 122 may acquire the processing from the development device 3, the design device 4, the development support device 200, and the like. The processing acquisition unit 122 may acquire the processing from the developer or the like via the input device 103.

When the processing acquisition unit 122 has acquired the entirety of the first model, the processing division unit 123 divides the acquired processing into a plurality of processing elements as necessary (S16). The processing division unit 123 may divide the processing using a work process as a unit. The processing division unit 123 may divide the processing into processing elements common in development of a plurality of models and processing elements that individually differ according to a type of the plant, target output information of the model, and the like. Note that when the processing acquisition unit 122 can acquire the processing of the first model for each processing element, the processing division by the processing division unit 123 may not be executed.

The processing element registration unit 124 stores the processing element in the processing element holding unit 131 in association with the facility identification information or the process identification information, and/or the target output information.

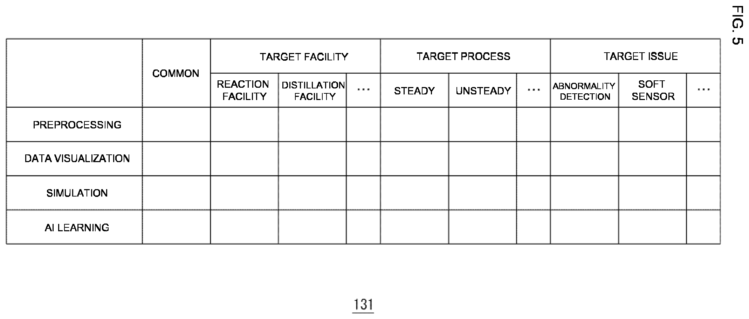

FIG. 5 shows an example of a data structure of the processing element holding unit 131. In the example of this figure, the processing element is held for each target plant facility, process, and issue (target output information). Further, a processing element commonly included in the model regardless of the target plant facility, process, and issue is held.

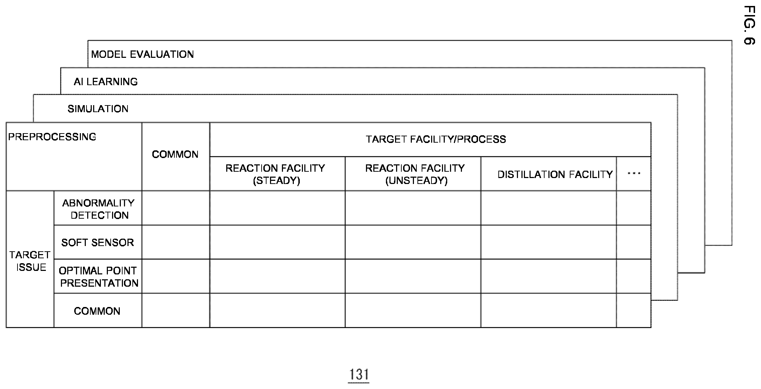

FIG. 6 shows an example of the data structure of the processing element holding unit 131. In the example of this figure, the processing element holding unit 131 is provided for each work process. In the processing element holding unit 131 of each work process, the processing element is held in a matrix of a target plant facility and process and a target issue (target output information). Note that the processing element holding unit 131 is not limited to the relational database as shown in FIGS. 5 and 6, and may be configured as, for example, a graph database in which each processing element is linked with a target plant facility and process, and/or a target issue by an edge.

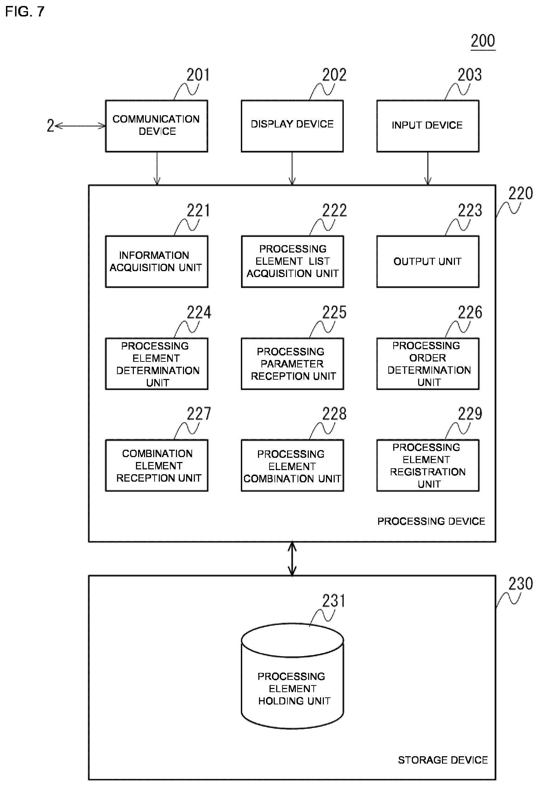

FIG. 7 shows a configuration of the development support device 200 according to the first embodiment. The development support device 200 includes a communication device 201, a display device 202, an input device 203, a processing device 220, and a storage device 230.

The communication device 201 controls wireless or wired communication. The display device 202 displays a screen generated by the processing device 220. The display device 202 may be a liquid crystal display device, an organic EL display device, or the like. The input device 203 transmits an instruction input by a user of the development support device 200 to the processing device 220. The input device 203 may be a mouse, a keyboard, a touch pad, or the like. The display device 202 and the input device 203 may be implemented as a touch panel.

The storage device 230 stores data and computer programs used by the processing device 220. The storage device 230 includes a processing element holding unit 231.

The processing element holding unit 231 holds processing elements that should constitute a development process of a model relating to an operation of the plant facility 10 in association with facility identification information or process identification information of the plant facility 10, and/or target output information of the model. The processing element holding unit 231 may be the same as the processing element holding unit 131. The processing element holding unit 231 may be acquired from the construction support device 100 and stored in the storage device 230. When the development support device 200 accesses the processing element holding unit 131 of the construction support device 100, the processing element holding unit 231 may not be provided.

The processing device 220 includes an information acquisition unit 221, a processing element list acquisition unit 222, an output unit 223, a processing element determination unit 224, a processing parameter reception unit 225, a processing order determination unit 226, a combination element reception unit 227, a processing element combination unit 228, and a processing element registration unit 229. These configurations are realized by an arbitrary circuit, a CPU of a computer, a memory, a program loaded in the memory, and the like in terms of hardware components, but functional blocks realized by their cooperation are depicted here. Therefore, it will be understood by those skilled in the art that these functional blocks can be realized in various forms by only hardware, only software, or a combination thereof.

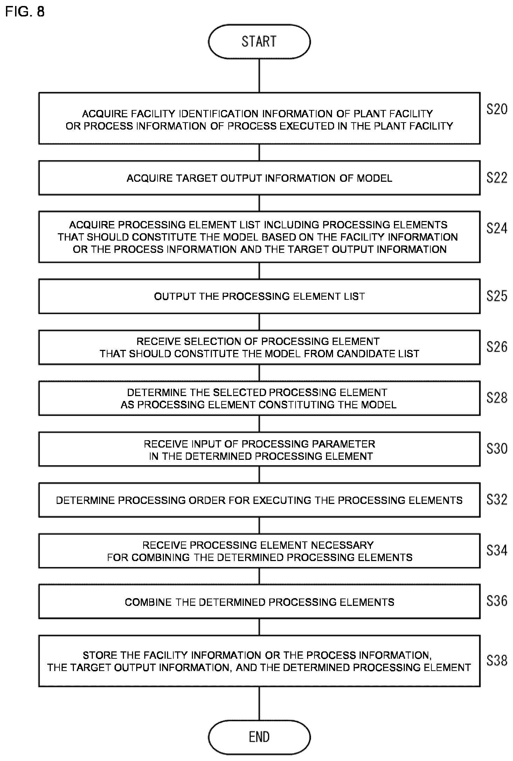

FIG. 8 is a flowchart showing a procedure of the support method according to the first embodiment. A procedure for supporting a development of a model by the development support device 200 will be described with reference to FIGS. 7 and 8.

The information acquisition unit 221 acquires facility identification information of a plant facility to be developed or process identification information of a process executed in the plant facility (S20). The information acquisition unit 221 may acquire the facility identification information or the process identification information from the development device 3, the design device 4, and the like. The information acquisition unit 221 may acquire the facility identification information or the process identification information from a developer or the like via the input device 203.

The information acquisition unit 221 acquires target output information of the model (S22). The information acquisition unit 221 may acquire the target output information from the development device 3, the design device 4, and the like. The information acquisition unit 221 may acquire the target output information from the developer or the like via the input device 203.

The processing element list acquisition unit 222 acquires a processing element list including processing elements that should constitute a development process of the model, based on the facility identification information or the process identification information and the target output information (S24). The processing element list acquisition unit 222 may acquire the processing element list with reference to the processing element holding unit 231 or the processing element holding unit 131. When the processing element holding unit 231 or the processing element holding unit 131 has the data structure shown in FIG. 5, the processing element list acquisition unit 222 extracts common processing elements and processing elements whose target facility, target process, and target issue match the facility identification information, the process identification information, and the target output information, respectively, and acquires the processing element list. When the processing element holding unit 231 or the processing element holding unit 131 has the data structure shown in FIG. 6, the processing element list acquisition unit 222 extracts common processing elements and processing elements whose target facility, target process, and target issue match the facility identification information, the process identification information, and the target output information, respectively, for each work process, and acquires the processing element list.

The output unit 223 outputs the acquired processing element list to the developer as a candidate list of processing elements that should constitute the development process of the model (S25). The output unit 223 may display the candidate list on the display device 202. The output unit 223 may transmit the candidate list to a terminal device used by the developer.

The processing element determination unit 224 receives selection of processing elements that should constitute the development process of the model from the candidate list (S26), and determines the selected processing element as a processing element constituting the development process of the model (S28). The processing element determination unit 224 may receive selection of the processing element from the developer via the input device 203. The processing element determination unit 224 may receive selection of the processing element from the terminal device used by the developer. The processing element determination unit 224 may automatically determine a processing element listed in the processing element list as a processing element constituting the development process of the model. The processing element determination unit 224 may automatically select a processing element based on a predetermined selection criterion, and determine the selected processing element as a processing element constituting the development process of the model. When the processing element is automatically selected, the selection of the processing element may be performed by a machine learning model. In that case, the machine learning model may be a model that learns a relationship among facility identification information and/or process identification information of AI constructed in the past, target output information, and a processing element included in a development process of the AI, and a general AI construction flow not limited to a plant field, and determines a processing element of the second model upon input of the facility identification information, the process identification information, or the target output information of the second model.

The processing parameter reception unit 225 receives an input of a processing parameter in the determined processing element (S30). The processing parameter may include a parameter used when executing the processing element. The processing parameter reception unit 225 sets the received processing parameter to the processing element. The processing parameter reception unit 225 may receive the processing parameter from the developer via the input device 203. The processing parameter reception unit 225 may receive the processing parameter from the terminal device used by the developer. For example, when the processing element relates to outlier removal processing..., it receives an input of a parameter serving as a criterion for removing an outlier. The parameter serving as the criterion for removing the outlier is, for example, based on an interquartile range (hereinafter, IQR) of acquired data,
- a lower limit value is (first quartile) - 1.5 * IQR
- an upper limit value is (third quartile) + 1.5 * IQR.

Note that the processing parameter may be set without requiring input by the developer. In that case, the processing element may store an initial setting parameter such as a setting parameter in the first model. In this case, it may be configured such that the developer further confirms the initial setting parameter and edits it as necessary.

The processing order determination unit 226 determines a processing order for executing the processing elements (S32). The processing order determination unit 226 may receive the processing order from the developer via the input device 203. The processing order determination unit 226 may receive the processing order from the terminal device used by the developer. The processing order determination unit 226 may automatically determine the processing order based on a predetermined criterion. The predetermined criterion may be, for example, a processing order in the first model, a criterion based on a processing order in AI relating to an operation of a plurality of plants constructed in the past such as the first model, or a criterion based on an order in AI development in another field, not limited to a plant operation. Such a criterion of the processing order may refer to one stored in the processing element holding unit 231 or may be learned based on a processing order of AI constructed in the past.

The combination element reception unit 227 receives a processing element necessary for combining the determined processing elements (S34). When information output from a preceding processing element does not match information to be input to a succeeding processing element, a processing element that generates input information for the succeeding processing element from output information from the preceding processing element may be added as a combination element. The combination element reception unit 227 may receive a source code, a parameter, and the like of the combination element from the developer via the input device 203. The combination element reception unit 227 may receive a source code, a parameter, and the like of the combination element from the terminal device used by the developer. The combination element reception unit 227 may automatically generate the combination element based on the output information of the preceding processing element and the input information of the succeeding processing element.

The processing element combination unit 228 combines the determined processing elements (S36). The processing element combination unit 228 combines the determined processing element and the combination element in the determined processing order. Thereby, the second model is generated.

The processing element registration unit 229 stores the facility identification information or the process identification information, the target output information, and the determined processing element in the processing element holding unit 231 (S38). Thereby, a processing element constituting the development process of the developed model can be utilized for development of a model to be developed next time or later.

When a developed model is changed or added, the contents of the processing element holding unit 131 and the processing element holding unit 231 may be updated accordingly.

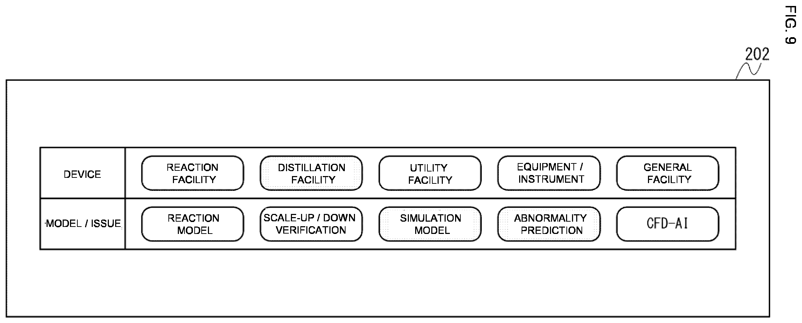

FIG. 9 shows an example of a screen displayed on the display device 202 of the development support device 200. In this figure, a user interface screen for the developer to select the type of apparatus targeted for development, a model, and a type of an issue is displayed. When the developer selects the type of apparatus, the model, and the type of issue, the information acquisition unit 221 acquires the facility identification information of the plant facility to be developed and the target output information of the model.

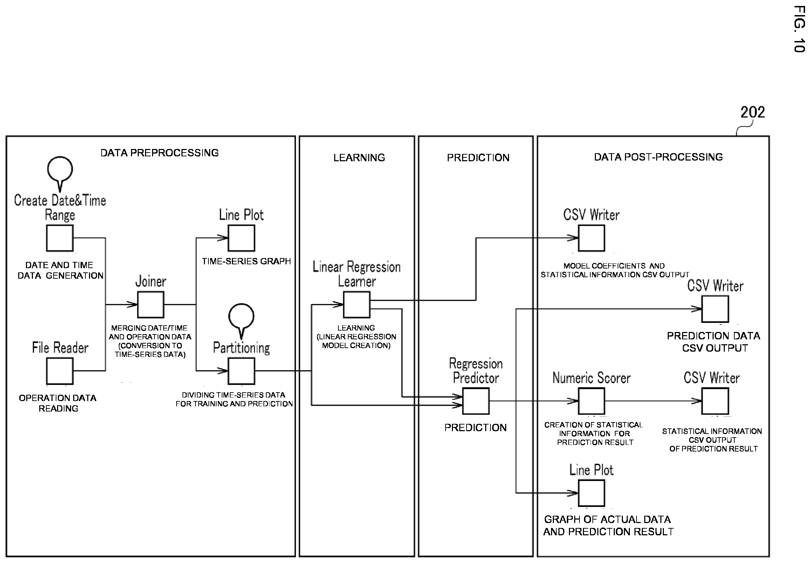

FIG. 10 shows an example of a screen displayed on the display device 202 of the development support device 200. In this figure, the output unit 223 displays a list of processing elements that should constitute the development process of the model, which is acquired by the processing element list acquisition unit 222 in accordance with the type of apparatus, the model, and the type of issue selected by the developer.

According to the development support system of the present embodiment, since knowledge and resources when a model was developed in the past are utilized, a development of a model which has been conventionally performed individually can be made efficient, and a cost, a time, a labor, and the like required for developing a new model can be significantly reduced. Further, since division of labor of the model development can be made possible, a process engineer, a data scientist, an AI developer, and the like can concentrate on their respective essential works.

### (Second Embodiment)

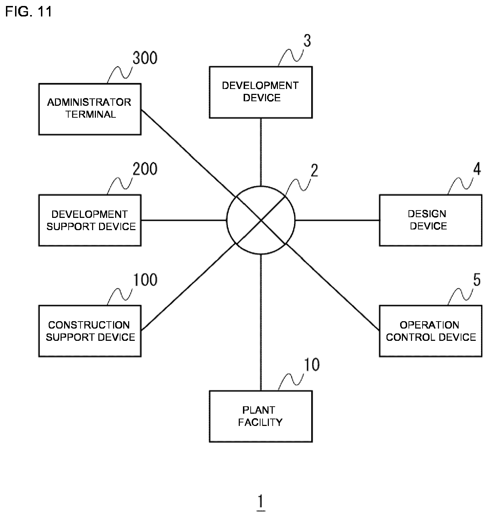

FIG. 11 shows a configuration of a development support system 1 according to a second embodiment. The development support system 1 according to the second embodiment includes an administrator terminal 300 in addition to the configuration of the development support system 1 according to the first embodiment shown in FIG. 1. The development support system 1 according to the second embodiment supports development of a model recommended for implementation in order to suitably operate the plant facility 10. A configuration and an operation different from those of the development support system 1 of the first embodiment will be mainly described, and description of a configuration and an operation similar to those of the first embodiment will be appropriately omitted.

The administrator terminal 300 is a terminal used by an administrator of the plant facility 10. The administrator terminal 300 may be a terminal used by an owner, a designer, a developer, a maintainer, an engineer, or the like of the plant facility 10. The administrator terminal 300 may be a terminal device such as any computer, a smartphone, or a mobile phone.

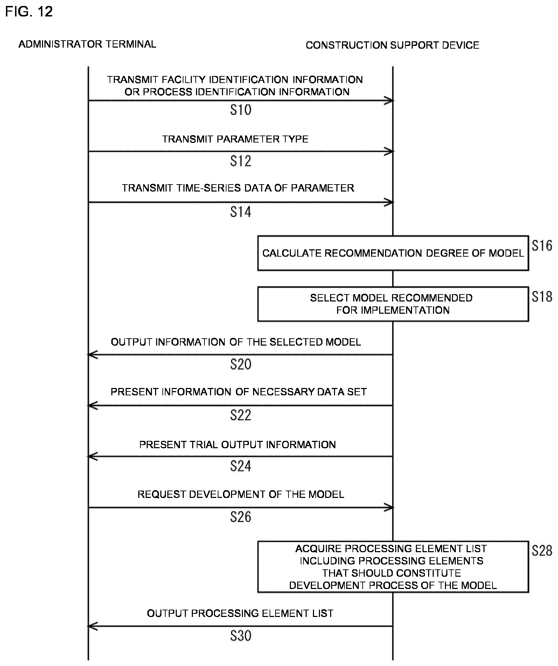

FIG. 12 is a sequence diagram showing a procedure of a support method according to the second embodiment. The administrator terminal 300 transmits facility identification information of the plant facility 10 or process identification information of a process executed in the plant facility 10 to the development support device 200 (S10). The administrator terminal 300 transmits parameter identification information of a parameter acquired in an operation of the plant facility 10 to the development support device 200 (S12). Here, the parameter identification information includes information on a type of a parameter acquired in the operation of the plant facility 10 such as temperature, pressure, or concentration. The parameter identification information may further include information on an acquisition position indicating where the parameter is acquired in the plant facility 10, such as an inlet of the facility, the inside of the facility, or an outlet of the facility. The administrator terminal 300 transmits time-series data of the parameter acquired in the operation of the plant facility 10 to the development support device 200 (S14).

The development support device 200 calculates a recommendation degree representing a degree to which implementation of a model should be recommended in order to suitably operate the plant facility 10, for a plurality of models relating to the operation of the plant facility 10, based on the facility identification information or the process identification information acquired from the administrator terminal 300, the parameter identification information, and the time-series data of the parameter (S16). The recommendation degree is determined in advance based on, for example, a past recommendation record, a past implementation record, an evaluation of a model implemented in the past, the operational performance of a plant facility 10 in which a model was implemented in the past, and the like, and is held in the development support device 200. The development support device 200 selects a model recommended for implementation from among the plurality of models relating to the operation of the plant facility 10 by referring to the calculated recommendation degree (S18). The development support device 200 outputs information of the selected model to the administrator terminal 300 (S20).

The development support device 200 presents information of a data set necessary for implementing the selected model to the administrator terminal 300 (S22). The development support device 200 presents output information output from the model when the model is tried by inputting the time-series data of the parameter to the selected model to the administrator terminal 300 (S24).

The administrator determines a model to be implemented with reference to the information presented from the development support device 200, and sends a request from the administrator terminal 300 to the development support device 200 to develop the model (S26).

As described in the first embodiment, the development support device 200 acquires a processing element list including processing elements that should constitute a development process of the requested model (S28), and outputs the acquired processing element list to the administrator terminal 300 (S30). The subsequent procedure is similar to that of the first embodiment.

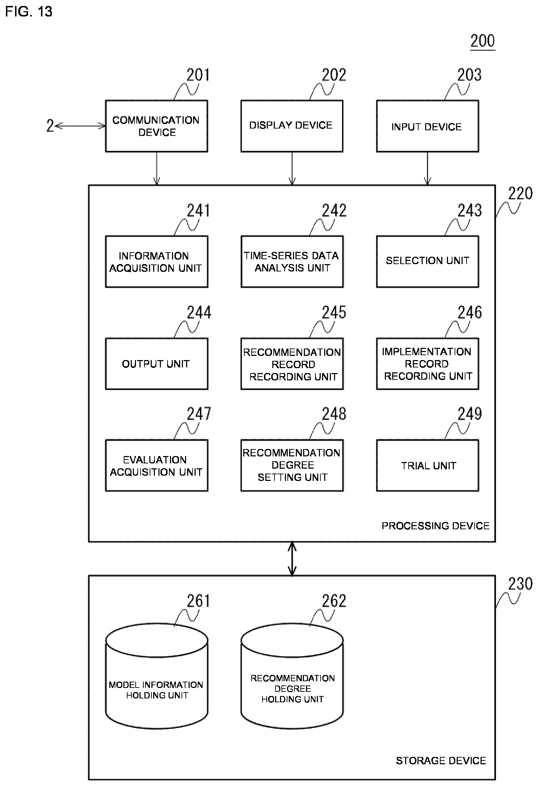

FIG. 13 shows a configuration of a development support device according to the second embodiment. The development support device 200 includes a communication device 201, a display device 202, an input device 203, a processing device 220, and a storage device 230. The development support device 200 according to the second embodiment may further include the configuration of the development support device 200 of the first embodiment shown in FIG. 7.

The storage device 230 stores data and computer programs used by the processing device 220. The storage device 230 includes a model information holding unit 261 and a recommendation degree holding unit 262.

The model information holding unit 261 holds information of a plurality of models relating to an operation of the plant facility 10. The model information holding unit 261 holds information such as target output information of a model, input information, a data set necessary for implementing a model, a processing element list including processing elements that should constitute a development process of a model, time, costs, and personnel required for developing a model, a past recommendation record of a model, and a past implementation record of a model, and the model itself.

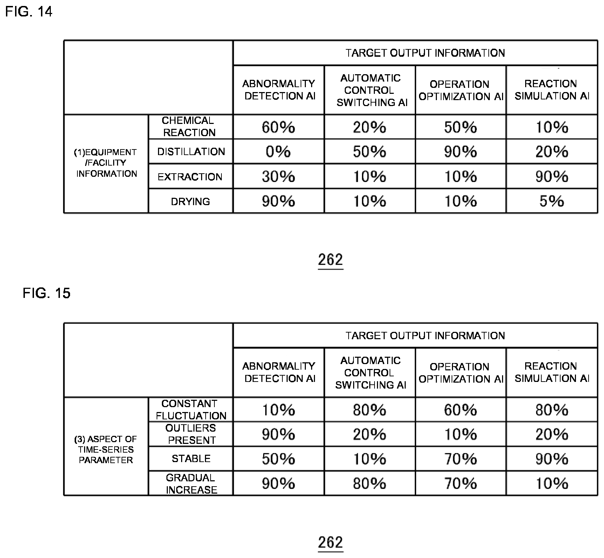

The recommendation degree holding unit 262 holds a recommendation degree representing a degree to which implementation of a model should be recommended for each feature of the facility identification information or the process identification information of the plant facility 10, the parameter identification information, and the time-series data of the parameter. FIGS. 14 and 15 show examples of internal data of the recommendation degree holding unit 262. FIG. 14 shows a table storing a correspondence relationship between a temperature and a pressure when the plant facility 10 is operated and a recommendation degree of a model. FIG. 15 shows a table storing a correspondence relationship between a feature of time-series data of a parameter acquired when the plant facility 10 is operated and a recommendation degree of a model. The table shown in FIG. 15 may be held for each type of parameter. The recommendation degree holding unit 262 may hold a table storing a correspondence relationship between a type of parameter acquired when the plant facility 10 is operated and a recommendation degree of a model.

The processing device 220 includes an information acquisition unit 241, a time-series data analysis unit 242, a selection unit 243, an output unit 244, a recommendation record recording unit 245, an implementation record recording unit 246, an evaluation acquisition unit 247, a recommendation degree setting unit 248, and a trial unit 249. These configurations are realized by an arbitrary circuit, a CPU of a computer, a memory, a program loaded in the memory, and the like in terms of hardware components, but functional blocks realized by their cooperation are depicted here. Therefore, it will be understood by those skilled in the art that these functional blocks can be realized in various forms by only hardware, only software, or a combination thereof.

The information acquisition unit 241 acquires facility identification information of the plant facility 10 or process identification information of a process executed in the plant facility 10, parameter identification information of a parameter acquired in an operation of the plant facility 10, and time-series data of the parameter from the administrator terminal 300. The information acquisition unit 241 may acquire information relating to a plant facility 10 which has already been operated from the administrator terminal 300, or may acquire information relating to a plant facility 10 which has not been operated yet from the administrator terminal 300. The information acquisition unit 241 may acquire parameter identification information or time-series data of a parameter acquired when the plant facility 10 is operated from the administrator terminal 300, or may acquire, from the administrator terminal 300, parameter identification information or time-series data of a parameter acquired from a simulator or the like which simulates an operation of the plant facility 10. The information acquisition unit 241 may acquire these pieces of information from the development device 3, the design device 4, the operation control device 5, the plant facility 10, and the like. The information acquisition unit 241 may acquire the facility identification information or the process identification information from a developer or the like via the input device 203.

The time-series data analysis unit 242 analyzes the time-series data of the parameter acquired by the information acquisition unit 241. The time-series data analysis unit 242 may calculate a statistical value such as a maximum value, a minimum value, an average value, a variance, a standard deviation, and a median of the time-series data. The time-series data analysis unit 242 may calculate the rate of change of the time-series data, the rate of change of the change rate, local maxima, local minima, an inflection point, an amplitude, a frequency, and the like. The time-series data analysis unit 242 may analyze a feature, an aspect, and a tendency of the time-series data in a predetermined period. Features of the time-series data may include that the time-series data is stable, is constantly fluctuating, is gradually increasing, is gradually decreasing, or has outliers, and the like. For example, the time-series data analysis unit 242 may determine that the time-series data is stable when a difference between the maximum value and the minimum value of the time-series data in a predetermined period is equal to or less than a predetermined value, when a variance thereof is equal to or less than a predetermined value, when an average value of absolute values of the change rates is equal to or less than a predetermined value, and the like. The time-series data analysis unit 242 may determine that the time-series data is constantly fluctuating when a variance of the time-series data in a predetermined period is equal to or larger than a predetermined value, when an average value of absolute values of the change rates is equal to or larger than a predetermined value, and the like.

The selection unit 243 selects a model recommended for implementation from among a plurality of models relating to the operation of the plant facility 10, based on the facility identification information or the process identification information, the parameter identification information, and the time-series data of the parameter acquired by the information acquisition unit 241. The selection unit 243 calculates a recommendation degree of each of a plurality of models with reference to the recommendation degree holding unit. For example, the selection unit 243 may acquire a recommendation degree corresponding to the facility identification information or the process identification information from the table shown in FIG. 14, acquire a recommendation degree corresponding to an aspect of the time-series data of the parameter from the table shown in FIG. 15, and calculate a product of these recommendation degrees as the recommendation degree of the model. When a table storing a correspondence relationship between the parameter identification information and the recommendation degree is held in the recommendation degree holding unit 262, a recommendation degree corresponding to the parameter identification information may be further acquired, and a product of the recommendation degree corresponding to the facility identification information or the process identification information, the recommendation degree corresponding to the parameter identification information, and the recommendation degree corresponding to the aspect of the time-series data of the parameter may be calculated as the recommendation degree of the model. The selection unit 243 selects a model having a high calculated recommendation degree as a model recommended for implementation. The selection unit 243 may further select a model based on conditions relating to facility identification information or process identification information, parameter identification information, time-series data of a parameter, a location of a plant facility 10, a climate, a number of operating years, and the like, or an arbitrary combination thereof. Further, the selection unit 243 may select a model recommended for implementation based on a recommendation degree output by a non-linear model or a machine learning model which outputs a recommendation degree of each corresponding model with respect to an input including facility identification information or process identification information, parameter identification information, and an aspect of time-series data of a parameter. In this case, a machine learning model using facility identification information or process identification information, parameter identification information, and information on an aspect of time-series data of a parameter as features, and target output information as a target variable may be used. Here, for the information on the aspect of the time-series data of the parameter, features obtained by dimensionality reduction of raw data of the time-series data of the parameter may be used as explanatory variables. Further, the machine learning model may be trained using a recommendation record recorded in a recommendation record recording unit 245 to be described later, an implementation record of a model, an evaluation on a model implemented in the past acquired by an evaluation acquisition unit 247 to be described later, or the operational performance of a plant facility 10 in which a model is implemented in the past as training data.

The output unit 244 reads information of the model selected by the selection unit 243 from the model information holding unit 261, and outputs the information to the administrator terminal 300. The output unit 244 reads information of a data set necessary for implementing the model selected by the selection unit 243 from the model information holding unit 261, and outputs the information to the administrator terminal 300.

The trial unit 249 inputs the time-series data of the parameter acquired by the information acquisition unit 241 into the model selected by the selection unit 243 to test the model. The output unit 244 outputs output information of the model tried by the trial unit 249 to the administrator terminal 300.

The recommendation record recording unit 245 records information on a recommendation record of a model recommended from the development support device 200 to the administrator terminal 300 in the model information holding unit 261. The implementation record recording unit 246 records information on an implementation record of a model adopted by an administrator and implemented in the operation control device 5 in the model information holding unit 261.

The evaluation acquisition unit 247 acquires an evaluation of a model implemented in the operation control device 5 in the past. The evaluation acquisition unit 247 may acquire an evaluation of the model by the administrator from the administrator terminal 300. The evaluation acquisition unit 247 may evaluate the model based on the operational performance of a plant facility 10 in which the model was implemented in the past. For example, the evaluation acquisition unit 247 may evaluate the operational performance of a plant facility 10 in which a model is implemented based on time-series data of a parameter acquired in an operation of a plant facility 10 in which a model is implemented in the past, and determine an evaluation of the model.

The recommendation degree setting unit 248 sets a recommendation degree of the model and stores it in the recommendation degree holding unit 262. The recommendation degree setting unit 248 may set the recommendation degree of the model based on a recommendation record or an implementation record of the model held in the model information holding unit 261. For example, the greater the number of recommendations or implementations is, the higher the recommendation degree may be. Further, the higher a probability that a recommended model is implemented, the higher the recommendation degree may be. The recommendation degree setting unit 248 may set the recommendation degree of the model based on the evaluation on the model acquired by the evaluation acquisition unit 247. For example, the higher the evaluation of the model is, the higher the recommendation degree of the model may be.

Immediately after starting operation of the development support device 200, since a recommendation record, an implementation record, an evaluation of a model, and the like have not yet been accumulated, the recommendation degree of the model may be manually set. As the development support device 200 is operated, the recommendation degree setting unit 248 updates the recommendation degree of the model in accordance with the recommendation record, the implementation record, the evaluation on the model, and the like of the model. The recommendation degree of the model is updated in association with the facility identification information of a plant facility for which a model is recommended, implemented, or evaluated or the process identification information of a process executed in the plant facility, the parameter identification information acquired at the time of recommending the model, and the feature of the time-series data of the parameter. This makes it possible to set a more realistic recommendation degree for the model, and thus, accuracy in recommending a model can be improved.

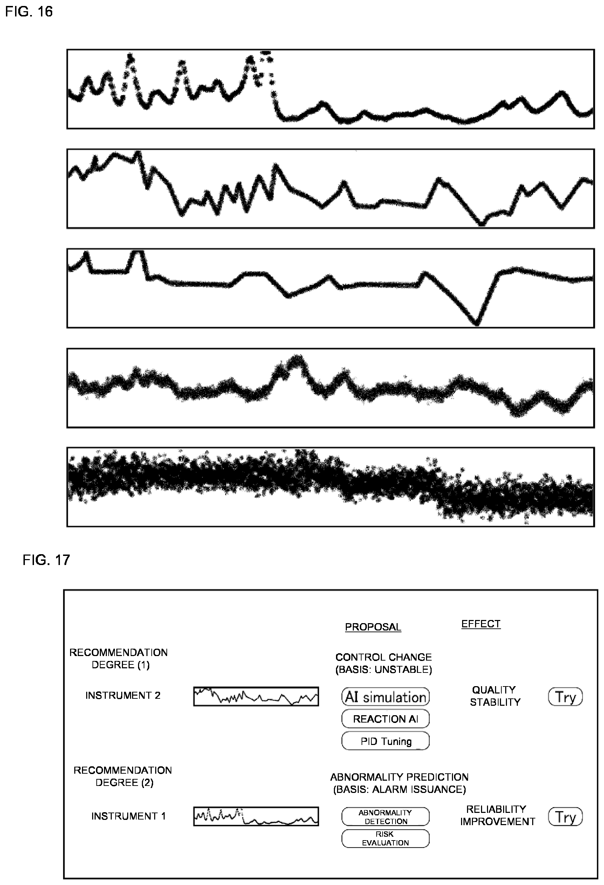

FIG. 16 shows an example of time-series data of a parameter. The information acquisition unit 241 may acquire time-series data of a plurality of parameters. The time-series data analysis unit 242 analyzes the acquired time-series data of the parameter to determine aspects and tendencies of the time-series data.

FIG. 17 shows an example of a screen presented from the development support device 200 to the administrator terminal 300. The output unit 244 outputs, to the administrator terminal 300, a screen displaying the facility identification information acquired by the information acquisition unit 241, the time-series data of the parameter, the information of the model selected by the selection unit 243, and the effect of implementing the model. When a button for trying the model is clicked, the trial unit 249 inputs the time-series data of the parameter acquired by the information acquisition unit 241 into the model and tries the model.

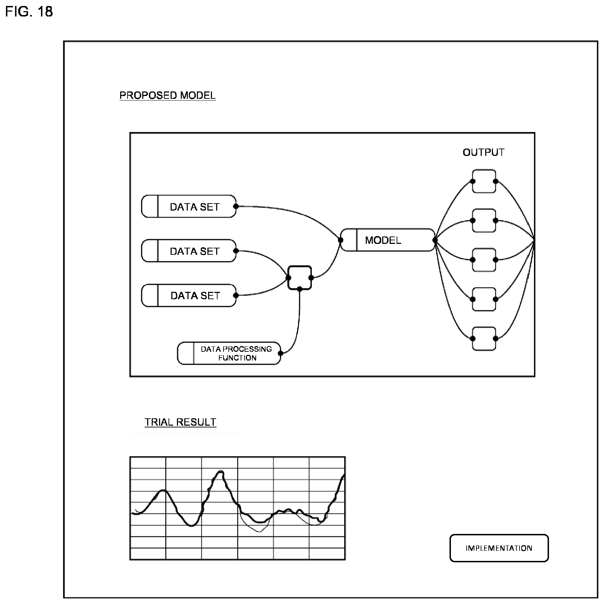

FIG. 18 shows an example of a screen presented from the development support device 200 to the administrator terminal 300. The output unit 244 outputs a screen displaying a configuration diagram of the model selected by the selection unit 243 and a trial result by the trial unit 249 to the administrator terminal 300. When a button for requesting implementation of a model is clicked, the output unit 244 reads a processing element list including processing elements that should constitute a development process of the model whose implementation is requested from the model information holding unit 261, and outputs the processing element list to the administrator terminal 300.

According to the technology of the present embodiment, a model is selected and recommended based on information relating to an operation of the plant facility 10, and thus, a model for suitably operating the plant facility 10 can be accurately recommended. This makes it possible to improve operation efficiency of the plant facility 10. Further, a cost and a labor required for developing a model can be significantly reduced.

The present invention has been described above based on the embodiments. It will be understood by those skilled in the art that these embodiments are examples, and various modifications are possible for combinations of individual components and processing steps, and such modifications are also within the scope of the present invention.

In the first embodiment, an example has been described in which a processing element constituting a model developed in the past is held in advance in the processing element holding unit 131. In another example, when the processing element list acquisition unit 222 acquires the list of processing elements, information relating to a model developed in the past may be collected. Also in this case, the processing element holding unit 131 may be temporarily generated.

### Industrial Applicability

The present invention is applicable to a support method, a support device, and a support program for supporting a development of a model relating to an operation of a plant facility.

### Reference Signs List

1: development support system, 2: communication network, 3: development device, 4: design device, 5: operation control device, 10: plant facility, 100: construction support device, 101: communication device, 102: display device, 103: input device, 120: processing device, 121: information acquisition unit, 122: processing acquisition unit, 123: processing division unit, 124: processing element registration unit, 130: storage device, 131: processing element holding unit, 200: development support device, 201: communication device, 202: display device, 203: input device, 220: processing device, 221: information acquisition unit, 222: processing element list acquisition unit, 223: output unit, 224: processing element determination unit, 225: processing parameter reception unit, 226: processing order determination unit, 227: combination element reception unit, 228: processing element combination unit, 229: processing element registration unit, 230: storage device, 231: processing element holding unit, 241: information acquisition unit, 242: time-series data analysis unit, 243: selection unit, 244: output unit, 245: recommendation record recording unit, 246: implementation record recording unit, 247: evaluation acquisition unit, 248: recommendation degree setting unit, 249: trial unit, 261: model information holding unit, 262: recommendation degree holding unit, 300: administrator terminal.

## Claims

1. A method for supporting implementation of a model relating to an operation of a plant facility, wherein
the method is executed by a processor, and comprises:
acquiring facility identification information of the plant facility or process identification information of a process executed in the plant facility;
acquiring parameter identification information of a parameter acquired in the operation of the plant facility;
acquiring time-series data of the parameter;
selecting a model recommended for implementation from among a plurality of models relating to the operation of the plant facility, based on the facility identification information or the process identification information, the parameter identification information, and the time-series data of the parameter; and
outputting information of the selected model.

2. The method according to claim 1, wherein
selecting the model recommended for implementation comprises referring to a recommendation degree representing a degree to which implementation of the model should be recommended, the recommendation degree being held in advance for each of the facility identification information or the process identification information, the parameter identification information, and a feature of the time-series data of the parameter.

3. The method according to claim 2, wherein
the recommendation degree is determined based on a past recommendation record.

4. The method according to claim 2, wherein
the recommendation degree is determined based on a past implementation record.

5. The method according to claim 2, wherein
the recommendation degree is determined based on an evaluation for a model implemented in the past.

6. The method according to claim 5, wherein
the evaluation is determined based on an operational performance of a plant facility in which the model was implemented in the past.

7. The method according to claim 5, wherein
the evaluation is determined based on time-series data of a parameter acquired in an operation of a plant facility in which the model was implemented in the past.

8. The method according to claim 1, further comprising presenting information of a data set necessary for implementing the selected model.

9. The method according to claim 1, further comprising presenting output information from the selected model when the time-series data of the parameter is input to the selected model.

10. The method according to claim 1, further comprising outputting a processing element list including processing elements that should constitute a development process of the selected model.

11. A support device comprising:
an information acquisition unit configured to acquire facility identification information of a plant facility or process identification information of a process executed in the plant facility, parameter identification information of a parameter acquired in an operation of the plant facility, and time-series data of the parameter;
a selection unit configured to select a model recommended for implementation from among a plurality of models relating to the operation of the plant facility, based on the facility identification information or the process identification information, the parameter identification information, and the time-series data of the parameter; and
an output unit configured to output information of the selected model.

12. A support program for causing a computer to function as:
an information acquisition unit configured to acquire facility identification information of a plant facility or process identification information of a process executed in the plant facility, parameter identification information of a parameter acquired in an operation of the plant facility, and time-series data of the parameter;
a selection unit configured to select a model recommended for implementation from among a plurality of models relating to the operation of the plant facility, based on the facility identification information or the process identification information, the parameter identification information, and the time-series data of the parameter; and
an output unit configured to output information of the selected model.
